# EUROPÄISCHE PATENTANMELDUNG

(11) **EP 0 848 192 A1**
(43) Veröffentlichungstag der Anmeldung: **17.06.1998**
(21) Anmeldenummer: 97118863.6
(22) Anmeldetag: 30.10.1997
(51) Int. Cl.: F16K 3/26

(54) **Ventileinrichtung**

(30) Priorität: 12.12.1996 DE 19651674
(71) Anmelder: WABCO GmbH, 30453 Hannover (DE)
(72) Erfinder: Bergemann, Klaus-Dieter, 30627 Hannover (DE); Geiger, Hartmut, 30823 Garbsen (DE)
(74) Vertreter: Schrödter, Manfred

(57) **Zusammenfassung**

Die Ventileinrichtung besitzt einen in einem Gehäuse (1, 12) angeordneten ringförmigen Körper (32), der mit einer Dichtfläche (52) eine Durchgangsöffnung begrenzt, und einen mit einem Dichtring (5) versehenen Ventilkolben (4), der bei geschlossenem Ventil (32, 52, 4, 5) in die Durchgangsöffnung eingetaucht ist.

Um zu verhindern, daß der Dichtring (5) beim Öffnungsvorgang des Ventils (32, 52, 4, 5) vom Druckmittel aus seiner Lagerstelle am Ventilkolben (4) herausgedrückt wird, sind am ringförmigen Körper (32) rippenartige Stützelemente (3, 34) für den Dichtring (5) angeordnet (Fig. 1). Die Stützelemente (3, 34) verlaufen in Richtung der Längsachse des Gehäuses (1, 12) und erstrecken sich radial in Richtung auf den Ventilkolben (4) zu. Die Stützelemente (3, 34) sind in radialer Richtung so bemessen, daß ihre dem Ventilkolben (4) zugewandte Stirnfläche plan mit der Dichtfläche (52) des ringförmigen Körpers (32) abschließt.

## Beschreibung

Die Erfindung betrifft eine Ventileinrichtung gemäß dem Oberbegriff des Patentanspruchs 1.

Eine derartige Ventileinrichtung ist aus der EP 0 021 057 A1 bekannt.

Die bekannte Ventileinrichtung besitzt einen Ventilkolben, der auf seinem Umfang einen Dichtring trägt, und eine Durchgangsöffnung, die von einer mit einer Dichtfläche versehenen Wand begrenzt wird. Beim Eintauchen des Ventilkolbens in die Durchgangsöffnung liegt der Dichtring in radialer Richtung unter Vorspannung dichtend an der Dichtfläche an. Mittels des Ventils sind eine erste Druckmittelkammer der Ventileinrichtung, welche mit einer Druckmittelquelle verbunden ist, und eine zweite Druckmittelkammer der Ventileinrichtung, die mit einem Verbraucher verbunden ist, wahlweise miteinander verbindbar oder gegeneinander absperrbar. Da der Durchmesser der Durchgangsöffnung kleiner ist als der Durchmesser des Bereiches der Ventileinrichtung, in welchen sich der Ventilkolben beim öffnungsvorgang des Ventils hineinbewegt, bildet die Wand des Gehäuses der Ventileinrichtung eine Stufe. Tritt beim Öffnungsvorgang des Ventils der Ventilkolben mit seinem den Dichtring tragenden Bereich aus dem Bereich der Dichtfläche aus, kann es passieren, daß der Dichtring beim Öffnungsvorgang des Ventils von dem durch die Durchgangsöffnung hindurchströmenden Medium aus seiner Lagerstelle im Ventilkolben herausgedrückt wird. Beim anschließenden Wiedereintauchen des Ventilkolbens in die Durchgangsöffnung kann der Dichtring durch die Stufe der die Durchgangsöffnung begrenzenden Wand beschädigt werden.

Diese Gefahr ist besonders bei Ventileinrichtungen gegeben, die einen großen Durchlaßquerschnitt aufweisen und deren Ventilkolben sehr schnell in die Offenstellung bringbar ist.

Der Erfindung liegt die Aufgabe zugrunde, eine Ventileinrichtung der eingangs erwähnten Art so auszubilden, daß ein Heraustreten des Dichtrings aus seiner Lagerstelle am Ventilkolben verhindert wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, durch die Anordnung von rippenartigen Stützelementen für den Dichtring im Bereich der Dichtfläche des Gehäuses ein Heraustreten des Dichtringes aus seiner Lagerstelle am Ventilkolben zu verhindern, ohne daß spezielle Haltemittel, wie z.B. Klemm- und Spannmittel, am Ventilkolben angeordnet werden müssen.

Gemäß einer vorteilhaften Weiterbildung des Erfindungsgegenstandes sind die Stützelemente für den Dichtring mit dem die Dichtfläche aufweisenden Bauteil der Ventileinrichtung als eine einstückige Baueinheit ausgebildet.

Ist als Dichtfläche der Ventileinrichtun ein Teil der Gehäusewand der Ventileinrichtung vorgesehen, so können gemäß einer weiteren vorteilhaften Ausgestaltung des Erfindungsgegenstandes die Stützelemente dadurch gebildet werden, daß in der Gehäusewand Vertiefungen angeordnet sind. Die dabei verbleibenden Erhöhungen, welche die Vertiefungen begrenzen, bilden dann die Stützelemente für den Dichtring.

Gemäß einer weiteren vorteilhaften Ausgestaltung der Erfindung ist in der Gehäusewand eine Stufe angeordnet, wobei die Lauf- und Dichtfläche für den Ventilkolben von dem den kleineren Durchmesser aufweisenden Bereich des Gehäuses gebildet wird. An der Wand des den größeren Durchmesser aufweisenden Bereiches des Gehäuses sind dann rippenartige Vorsprünge angeordnet, die an die Stufe anschließen, wobei die rippenartigen Vorsprünge mit ihren dem Ventilkolben zugewandten Stirnfläche stufenlos oder annähernd stufenlos in die Dichtfläche übergehen.

Anhand der Zeichnung wird nachfolgend ein Ausführungsbeispiel der Erfindung näher erläutert.

Es zeigen:
- Fig. 1: die erfindungsgemäße Ventileinrichtung im Schnitt und
- Fig. 2: einen Ausschnitt der Ventileinrichtung gemäß Fig. 1 nach der Schnittlinie A-A.

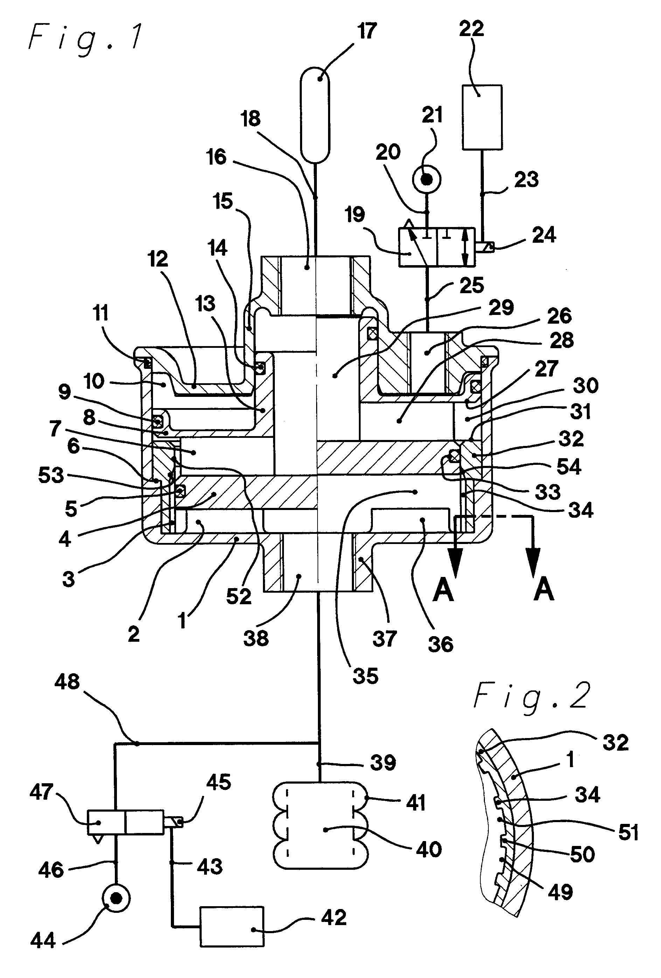

Gemäß Fig. 1 ist die erfindungsgemäße Ventileinrichtung in der Luftfederanlage eines Fahrzeugs angeordnet. Die Ventileinrichtung weist ein Gehäuse (1, 12) auf, das aus einem topfförmig ausgebildeten ersten Gehäuseteil (1) und einem als Deckel (12) ausgebildeten zweiten Gehäuseteil, welches das topfförmige Gehäuseteil (1) verschließt, besteht. Zwischen dem topfförmigen Gehäuseteil (1) und dem Deckel (12) ist ein Dichtring (11) angeordnet, der den Gehäuseinnenraum gegen die Atmosphäre abdichtet. Der Boden des topfförmigen Gehäuseteiles (1) weist einen zentrisch angeordneten ersten rohrförmigen Gehäusefortsatz (37) auf, der sich nach außen, vom Boden weg erstreckt. Ebenso besitzt der Deckel (12) einen zentrisch angeordneten zweiten rohrförmigen Gehäusefortsazt (15), der sich nach außen, vom Deckel (12) weg erstreckt. Die beiden rohrförmigen Gehäusefortsätze (37 und 15) sind gleichachsig zueinander angeordnet.

Im Gehäuse (1, 12) ist ein als Hohlkolben ausgebildeter abgestufter Kolben (4, 8) in Richtung der Längsachse des Gehäuses (1, 12) bewegbar angeordnet. Der Kolben (4, 8) dient als Steuerkolben. An dem den größeren Durchmesser aufweisenden ersten Kolbenteil (8) des Kolbens (4, 8) ist zentrisch ein rohrförmiger Fortsatz (13) angeordnet, welcher sich vom ersten Kolbenteil (8) weg in den zweiten rohrförmigen Gehäusefortsatz (15) hineinerstreckt und in diesem gleitend geführt wird. Auf dem Umfang des rohrförmigen Fortsatzes (13) ist ein Dichtring (14) angeordnet, der dichtend an der Wand des zweiten rohrförmigen Gehäusefortsatzes (15) des Deckels (12) anliegt.

Von der dem Deckel (12) abgewandten, den kleineren Durchmesser aufweisenden Seite des Kolbens (4, 8) wird eine erste Druckmittelkammer (35) begrenzt, die mit einem im ersten Gehäusefortsatz (37) angeordneten ersten Druckmittelanschluß (38) des Gehäuses (1, 12) verbunden ist. Eine zweite Druckmittelkammer (29, 30), die aus einer vom Hohlraum des Kolbens (4, 8) gebildeten ersten Teilkammer (29) und einer von einem Ringraum gebildeten zweiten Teilkammer (30) besteht, ist über den rohrförmigen Fortsatz (13) des Kolbens (4, 8) mit einem im zweiten Gehäusefortsatz (15) angeordneten zweiten Druckmittelanschluß (16) des Gehäuses (1, 12) verbunden. Die zweite Teilkammer (30), die außerhalb des Kolbens (4, 8) gelegen ist, wird von einer Ringfläche des Kolbens (4, 8) begrenzt. Die Ringfläche dient als eine zweite Wirkfläche (27) des Kolbens (4, 8), welche einer ersten Wirkfläche und einer dritten Wirkfläche des Kolbens (4, 8) entgegengerichtet ist. Die erste Teilkammer (29) und die zweite Teilkammer (30) sind mittels das erste Kolbenteil (8) des Kolbens (4, 8) in radialer Richtung durchdringender Durchgangsöffnungen (7 und 28) miteinander verbunden. Die der zweiten Wirkfläche (27) des Kolbens (4, 8) entgegengerichtete, ebenfalls als Ringfläche ausgebildete erste Wirkfläche des Kolbens (4, 8) begrenzt eine als Steuerkammer (10) dienende dritte Druckmittelkammer. Die Steuerkammer (10) ist mit einem Steueranschluß (26) des Gehäuses (1, 12) verbunden. Die Seite des Kolbens (4, 8), welche die erste Druckmittelkammer (35) begrenzt, dient als vierte Wirkfläche des Kolbens (4, 8), die ebenfalls der die Steuerkammer (10) begrenzenden ersten Wirkfläche des Kolbens (4, 8) entgegengerichtet ist.

Die dritte Wirkfläche wird von der Stirnfläche des rohrförmigen Fortsatzes (13) des Kolbens (4, 8) und von dem die erste Teilkammer (29) begrenzenden Boden des Kolbens (4, 8) gebildet. Die erste Wirkfläche und die dritte Wirkfläche des Kolbens (4, 8) sind genauso groß wie die diesen Wirkflächen entgegengerichteten, aus der zweiten Wirkfläche und der vierten Wirkfläche bestehender Wirkflächen des Kolbens (4, 8).

Die Wand des topfförmigen Gehäuseteils (1) weist im Bereich der ersten Druckmittelkammer (35) eine Stufe (6) auf. Auf der Stufe (6) liegt ein ringförmiger Körper (32) auf, der unter Vorspannung an der Wand des topfförmigen Gehäuseteils (1) anliegt. Der ringförmige Körper (32) ist so ausgebildet und so in das topfförmige Gehäuseteil (1) eingepaßt, daß zwischen seiner äußeren Mantelfläche und der Wand des topfförmigen Gehäuseteils (1) kein Spalt vorhanden ist, über welchen ein ungewollter Austausch von Druckmittel der ersten Druckmittelkammer (35) und der zweiten Druckmittelkammer (29, 30) stattfinden könnte. Zwischen der äußeren Mantelfläche des ringförmigen Körpers (32) und der Wand des topfförmigen Gehäuseteils (1) kann zur Abdichtung auch ein Dicht- und/oder Klebemittel vorgesehen werden. Der ringförmige Körper (32) ist so ausgebildet, daß er sich in radialer Richtung über die Stufe (6) hinaus, in Richtung auf die Mantelfläche des als Ventilkolben (4) dienenden zweiten Kolbenteiles des Kolbens (8, 4) zu erstreckt und mit seiner dem Ventilkolben (4) zugewandten Seite als Dichtfläche (52) eines mit dem Ventilkolben (4) gebildeten, nach Art eines Schieberventils arbeitenden Ventils (32, 52, 4, 5) dient.

Auf dem Umfang des den größeren Durchmesser aufweisenden ersten Kolbenteiles (8) ist ein erster Dichtring (9) angeordnet, der dichtend an der Wand es Gehäuses (1, 12) anliegt und so die zweite Druckmittelkammer (29, 30) und die Steuerkammer (10) gegeneinander abdichtet. In einer Umfangsnut (33) des den kleineren Durchmesser aufweisenden, als Ventilschließglied bzw. Ventilkolben (4) dienenden zweiten Kolbenteiles ist ein zweiter Dichtring (5) angeordnet, der bei geschlossenem Ventil (32, 52, 4, 5) dichtend an der Dichtfläche (52) des ringförmigen Körpers (32) anliegt. Mittels des so gebildeten Ventils (32, 52, 4, 5) ist die erste Druckmittelkammer (35) wahlweise mit der zweiten Druckmittelkammer (29, 30) verbindbar oder gegen diese absperrbar. Zur Betätigung des Ventils (32, 52, 4, 5) dient der Kolben (8, 4), wobei das erste Kolbenteil (8) zusammen mit dem zweiten Kolbenteil die Funktion eines Steuerkolbens und das zweite Kolbenteil die Funktion eines als Ventilschließglied dienenden Ventilkolbens (4) hat.

An der dem Boden des topfförmigen Gehäuseteils (1) zugewandten Seite des ringförmigen Körpers (32) sind an diesem im gleichen Abstand zueinander rippenartige Stützelemente (3, 34) angeordnet, die in Richtung der Längsachse des topfförmigen Gehäuseteiles (1) verlaufend sich einerseits radial nach innen in Richtung auf die erste Druckmittelkammer (35) zu und andererseits vom ringförmigen Körper (32) ausgehend in Richtung auf den Boden des topfförmigen Gehäuseteiles (1) zu erstrecken. Die radiale Erstreckung der rippenartigen Stützelemente (3, 34) ist so bemessen, daß die dem Ventilkolben (4) bzw. der ersten Druckmittelkammer (35) zugewandten Stirnflächen der Stützelemente (3, 34) stufenlos oder annähernd stufenlos in die Dichtfläche (52) des ringförmigen Körpers (32) übergehen. Die Stützelemente (3, 34) dienen als Abstützung für den Dichtring (5) des Ventilkolbens (4) und verhindern ein Heraustreten des Dichtringes (5) aus seiner Lagerstelle - Umfangsnut (33) - im Ventilkolben (4) beim Öffnungsvorgang des Ventils (32, 52, 4, 5) und somit eine Beschädigung des Dichtrings (5) beim Schließvorgang des Ventils (32, 52, 4, 5).

Der am ersten rohrförmigen Gehäusefortsatz (37) angeordnete erste Druckmittelanschluß (38) ist über eine Druckmittelleitung (39) mit einer als Hauptkammer (40) der Federeinrichtung dienenden Druckmittelkammer verbunden. Die Federeinrichtung (40, 41) wird von einem Luftfederbalg (41) mit Hauptkammer (40) und Zusatzkammer (17) gebildet. An die von der Hauptkammer (40) zum Druckmittelanschluß (38) führende Druckmittelleitung (39) ist über eine Druckmittelleitung (48) der Ausgang eines elektromagnetisch betätigbaren 3/2-Wegeventils (47) angeschlossen. Der Eingang des 3/2-Wegeventils (47) ist über eine Druckmittelleitung (46) mit einer Druckmittelquelle (44), die z.B. ein Druckluft-Vorratsbehälter sein kann, verbunden. Ein Elektromagnet (45) des 3/2-Wegeventils (47) ist über eine elektrische Leitung (43) mit einer Auswahl- und Steuereinrichtung (42) verbunden, mittels welcher das Niveau des Fahrzeugs - Höhenlage des Fahrzeugs - steuerbar ist. Der am zweiten rohrförmigen Gehäusefortsatz (15) angeordnete zweite Druckmittelanschluß (16) ist über eine Druckmittelleitung (18) mit der als Zusatzkammer (17) (Zusatzvolumen) dienenden Druckmittelkammer verbunden.

Bedingt durch die Ausbildung des Kolbens (4, 8) als Stufenkolben verbleibt am ersten Kolbenteil (8) des Kolbens (4, 8) die als zweite Wirkfläche (27) dienende Ringfläche, welche einer Ringfläche (31) gegenüberliegt, die von der dem ersten Kolbenteil (8) zugewandten Seite des ringförmigen Körpers (32) gebildet wird. Die Ringfläche (31) und die zweite Wirkfläche (27) des Kolbens (4, 8) begrenzen zusammen mit der Wand des topfförmigen Gehäuseteiles (1) und der Mantelfläche des als Ventilkolben (4) dienenden, den kleineren Durchmesser aufweisenden Kolbenteiles die als zweite Teilkammer (30) der zweiten Druckmittelkammer (29, 30) dienende Ringkammer. Die Steuerkammer (10) ist über den am Deckel (12) des Gehäuses (1, 12) angeordneten, als Steueranschluß (26) dienenden dritten Druckmittelanschluß und eine Druckmittelleitung (25) mit dem Ausgang eines als 3/2-Wege-Elektromagnetventil ausgebildeten Ventils (19) verbunden. Der Eingang des Ventils (19) steht über eine Druckmittelleitung (20) mit einer Druckmittelquelle (21), wie z.B. einem Druckluft-Vorratsbehälter, in Verbindung. Ein Elektromagnet (24) des Ventils (19) ist über eine elektrische Leitung (23) mit einer weiteren Auswahl- und Steuereinrichtung (22) verbunden. Mit der Auswahl- und Steuereinrichtung (22) kann die Betriebsweise für die Luftfeder gewählt werden - Federhärte erhöhen oder verringern durch Abschalten oder Zuschalten des Zusatzvolumens -.

Der Kolben (4, 8) wird bei druckloser Steuerkammer (10) an dem auch als ein erster Anschlag dienenden Deckel (12) und bei Beaufschlagung der Steuerkammer (10) mit Druckmittel an einem zweiten Anschlag (2, 36) zur Anlage gebracht. Der zweite Anschlag (2, 36) wird von am Boden des topfförmigen Gehäuseteiles (1) angeordneten Rippen (2 und 36) gebildet.

Fig. 2 zeigt einen Schnitt durch die Wand des topfförmigen Gehäuseteiles (1) nach der Schnittlinie A-A. In dieser Ansicht sind deutlich die am ringförmigen Körper (32) angeordneten rippenartigen Stützelemente (34 und 50), von denen der Einfachheit halber nur zwei mit Bezugsziffern versehen sind, erkennbar. Die Wand des Gehäuseteiles (1) und die einander zugewandten Seiten von jeweils zwei Stützelementen (34 und 50) begrenzen jeweils einen Kanal (49 bzw. 51), der zur ersten Druckmittelkammer (35) hin offen ist. Der Dichtring (5) des Ventilkolbens (4) wird über den gesamten Hub des Ventilkolbens (4) von den Stützelementen (34, 50, 3) abgestützt, sobald er sich von der Dichtfläche (52) des ringförmigen Körpers (32) gelöst hat.

Ein zusätzlicher Schutz für den Dichtring (5) gegen Beschädigung wird noch dadurch erreicht, daß im Übergangsbereich von der Dichtfläche (52) zum Boden der von den rippenartigen Stützelementen (3, 34, 50) begrenzten Kanäle (49, 51) zum Boden der Kanäle (49, 51) hin abfallende Schrägen (53 und 54) vorgesehen sind, so daß, insbesondere beim Schließvorgang des Ventils (32, 52, 4, 5), der Dichtring (5) nicht scharfe Kanten überfahren muß. Die rippenartigen Stützelemente (3, 34, 50) sind in gleichem Abstand zueinander angeordnet, wobei der Abstand zwischen den Stützelementen (3, 34, 50) so gewählt ist, daß einerseits durch die von den Stützelementen (3, 35, 50) begrenzten Kanäle (49, 51) der Druckmittelstrom von der Hauptkammer (40) zur Zusatzkammer (17) hin oder auch von der Zusatzkammer (17) zur Hauptkammer (40) hin nicht gedrosselt wird, und andererseits der Dichtring (5) nicht in die Kanäle (49, 51) gedrückt werden kann. Alle Kanten der Stützelemente (3, 34, 50) sind abgerundet, so daß ein Einschneiden in den Dichtring (5) ausgeschlossen ist.

Die Funktion der vorstehend beschriebenen, in einer Luftfederanlage eines Fahrzeugs angeordneten Ventileinrichtung wird nachfolgend, unter Bezugnahme auf die Fig. 1 und 2, näher erläutert. Zum besseren Verständnis der Funktion der in Fig. 1 gezeigten Ventileinrichtung ist in Fig. 1 die linke Hälfte der Ventileinrichtung bei vollständig geöffnetem Ventil und die rechte Hälfte der Ventileinrichtung bei vollständig geschlossenem Ventil dargestellt.

Es wird angenommen, daß die Luftfeder (40, 41) auf "HART" eingestellt ist und der Druck in der Hauptkammer (40) der Luftfeder (40, 41) höher ist als in der Zusatzkammer (17). Die Steuerkammer (10) der Ventileinrichung ist über das Ventil (19) mit der Atmosphäre verbunden. Die Druckmittelquelle (21) und die Steuerkammer (10) sind mittels des Ventils (19) gegeneinander abgesperrt. Das Ventil (32, 52, 4, 5) der Ventileinrichtung befindet sich in seiner Schließstellung, so daß die Hauptkammer (40) der Luftfeder (40, 41) und die Zusatzkammer (17) gegeneinander abgesperrt sind, wie in der rechten Hälfte der Fig. 1 dargestellt ist. Das 3/2-Wegeventil (47) sperrt die Hauptkammer (40) der Luftfeder (40, 41) gegen die Atmosphäre und gegen die Druckmittelquelle (44) ab, so daß in der Luftfeder (40, 41) eine konstange Luftmenge vorhanden ist.

Wenn eine weichere Federeinstellung gewünscht wird, betätigt der Fahrer des Fahrzeugs eine entsprechende Taste der Auswahl- und Steuereinrichtung (22). Von der Auswahl- und Steuereinrichtung (22) gelangt ein elektrisches Signal zum Elektromagneten (24) des Ventils (19). Das Ventil (19) schaltet in der Weise um, daß die Steuerkammer (10) der Ventileinrichtung gegen die Atmosphäre abgesperrt und mit der Druckmittelquelle (21) verbunden wird. Da die vom Steuerdruck auf die erste Wirkfläche und vom Druck der Zusatzkammer (17) auf die dritte Wirkfläche des Kolbens (4, 8) ausgeübte Kraft dann größer ist als die dieser Kraft entgegengerichtet auf die zweite Wirkfläche (27) und die vierte Wirkfläche des Kolbens (4, 8) einwirkende Kraft des Druckes der Zusatzkammer (17) und der Hauptkammer (40) bewegt der Kolben (4, 8) sich in Richtung auf die erste Druckmittelkammer (35) zu, und zwar soweit, bis dieser am zweiten Anschlag (2, 36) zur Anlage kommt. Das Ventil (32, 52,4, 5) gelangt dann in seine Offenstellung. Wenn bei der Bewegung des Kolbens (4, 8) in Richtung auf die erste Druckmittelkammer (35) zu der den Dichtring (5) tragende Bereich des Ventilkolbens (4) über die Dichtfläche (52) des ringförmigen Körpers (32) hinausfährt, kommt der Dichtring (5) an der ihm zugewandten Stirnfläche der rippenartigen Stützelemente (3, 34, 50) zur Anlage. Durch die von den Stützelementen (3, 34, 50) begrenzten Kanäle (49, 51) sowie den sich mit zunehmendem Kolbenhub vergrößernden Ringspalt zwischen der dem ringförmigen Körper (32) zugewandten Seite des Ventilkolbens (4) und dem ringförmigen Körper (32) strömt von der ersten Druckmittelkammer (35) Druckmittel in die zweite Druckmittelkammer (29, 30) und von dieser weiter durch den rohrförmigen Fortsatz (13) des Kolbens (4, 8) und den Druckmittelanschluß (16) sowie die Druckmittelleitung (18) in die Zusatzkammer (17). Da die Luftfeder (2, 3) dann ein um das Volumen der Zusatzkammer (8) vergrößertes Volumen hat, ist die Luftfeder (2, 3) weich.

Soll die Luftfeder (40, 41) wieder auf "HART" eingestellt werden, betätigt der Fahrer des Fahrzeugs eine entsprechende Taste der Auswahl- und Steuereinrichtung (22). Das Ventil (19) wird stromlos und gelangt wieder in seine Ausgangsstellung, in welcher es die Steuerkammer (10) der Ventileinrichtung gegen die Druckmittelquelle (21) absperrt und mit der Atmosphäre verbindet. Die Steuerkammer (10) wird drucklos. Da die vierte Wirkfläche und die zweite Wirkfläche (27) des Kolbens (4, 8) zusammen genauso groß sind wie die diesen Wirkflächen entgegengerichteten aus der ersten Wirkfläche und der dritten Wirkfläche bestehenden Wirkflächen des Kolbens (4, 8), die Steuerkammer (10) jedoch drucklos ist, so daß auf die erste Wirkfläche des Kolbens (4, 8) keine Druckkraft mehr ausgeübt wird, überwiegt die vom Druck der Hauptkammer (40) und somit vom Druck in der ersten Druckmittelkammer (35) auf den Kolben (4, 8) ausgeübte Kraft in Richtung auf die Steuerkammer (10) zu. Der Kolben (4, 8) wird in Richtung auf die Steuerkammer (10) zu verschoben und kommt am Deckel (12) des Gehäuses (1, 12) zur Anlage. Dabei gelangt das Ventil (32, 52, 4, 5) in seine Schließstellung. Die erste Druckmittelkammer (35) und die zweite Druckmittelkammer (29, 30) und somit auch die Hauptkammer (40) der Luftfeder (40, 41) und die Zusatzkammer (17) sind dann wieder gegeneinander abgesperrt.

Beim Schließvorgang des Ventils (32, 52, 4, 5) gleitet der Dichtring (5) auf den ihm zugewandten Stirnflächen der rippenartigen Stützelemente (3, 34, 50) ohne merklichen Übergang zur Dichtfläche (52) des ringförmigen Körpers (32).

Die rippenartigen Stützelemente (3, 34, 50) können, wie in den Fig. 1 und 2 dargestellt, als eine einstückige Baueinheit mit dem ringförmigen Körper (32) ausgebildet sein, welcher als ein Gehäuseeinsatz ausgebildet in das Gehäuse (1, 12) eingebracht und in diesem befestigt wird.

Es ist auch möglich, den ringförmigen Körper (32) als einen ringförmigen Vorsprung und die Stützelemente (3, 34, 50) als an diesen Vorsprung anschließende weitere Vorsprünge des Gehäuses (1, 12) auszubilden, die bei der Herstellung des Gehäuses (1, 12) direkt an die Wand des einen Gehäuseteiles (1) des Gehäuses (1, 12) angeformt werden.

Das Gehäuse kann aus dem topfförmig ausgebildeten Gehäuseteil (1) und dem Deckel (12) bestehen, wobei der rinförmige Körper (32) und die Stützelemente (3, 34, 50) im topfförmigen Gehäuseteil (1) angeordnet sind.

Es ist jedoch gemäß der Erfindung auch möglich, das Gehäuse 3-teilig auszubilden, wobei dann das mittlere Gehäuseteil einen ringförmigen Körper mit Dichtfläche oder eine Stufe aufweisen kann, an welchen bzw. an welche dann die rippenartigen Stützelemente anschließen.

Es ist gemäß der Erfindung auch möglich, einen Teilbereich der Gehäuseinnenwand als Dichtfläche des Ventils auszubilden, an welche in der Gehäusewand angeordnete, in Richtung der Längsachse des Gehäuses verlaufende nutartige Vertiefungen anschließen. Die nutatigen Vertiefungen dienen dann als Kanäle für das Druckmittel. Als Stützelemente zum Abstützen des Dichtringes des Ventilkolbens dienen dann die die Vertiefungen begrenzenden rippenartigen Teile der Gehäusewand. Die rippenartigen Stützelemente werden also dadurch gebildet, daß in der Gehäusewand Vertiefungen angeordnet werden. Ist das Gehäuse 3-teilig ausgebildet, so werden die Dichtfläche, die an diese anschließenden Vertiefungen und die rippenartigen Teile im mittleren Gehäuseteil angeordnet.

Werden der ringförmige Körper (32) und/oder die rippenartigen Stützelemente (3, 34, 50) nicht einstückig mit dem Gehäuse (1, 12) ausgebildet, können sie auch aus einem anderen Material bestehen als das Gehäuse.

Die erfindungsgemäß an die Dichtfläche (52) des ringförmigen Körpers (32) anschließenden rippenartigen Stützelemente können bei jeder Ventileinrichtung Verwendung finden, bei welcher das Ventil aus einer eine Dichtfläche aufweisenden Durchgangsöffnung und einem kolbenartigen Ventilschließglied besteht.

Die erfindungsgemäße, einem Schieberventil ähnlich ausgebildete Ventileinrichtung kann selbstverständlich auch anders ausgebildet sein als in der Zeichnung dargestellt. Es kann auf eine Steuerkammer und auch auf eine Abstufung des Kolbens verzichtet und statt dessen zur Betätigung des dann aus dem Kolben bestehenden Ventilschließgliedes eine mechanische, elektrische oder elektromagnetische Betätigungseinrichtung Verwendung finden.

Der als Ventilschließglied dienende Ventilkolben (4) kann mit dem als Betätigungseinrichtung für das Ventil (32, 52, 4, 5) dienenden Kolben (8) als eine einstückie Baueinheit ausgebildet sein. Es ist jedoch auch möglich, den Ventilkolben (4) und den Kolblen (8) als zwei einzelne Bauteile herzustellen und diese miteinander zu verbinden, wobei in einem solchen Fall der Ventilkolben (4) und der Kolben (8) aus unterschiedlichen Materialien bestehen können.

## Patentansprüche

1. Ventileinrichtung mit folgenden Merkmalen:
a) In einem Gehäuse (1, 12) ist ein Ventil (32, 52, 4, 5) angeordnet, welches von einer Durchgangsöffnung und einem Ventilschließglied (4, 5) gebildet wird, wobei das Ventilschließglied (4, 5) bei geschlossenem Ventil (32, 52, 4, 5) wenigstens über einen Teil seiner axialen Erstreckung in die Durchgangsöffnung eingetaucht ist;
b) über das Ventil (32, 52, 4, 5) sind zwei Druckmittelkammern (29, 30 und 35) wahlweise miteinander verbindbar oder gegeneinander absperrbar;
c) das Ventilschließglied (4, 5) besitzt einen Dichtring (5), der bei geschlossenem Ventil (32, 52, 4, 5) an einer die Durchgangsöffnung begrenzenden Dichtfläche (52) dichtend anliegt;
d) es ist eine Betätigungseinrichtung (8, 4) für das Ventil (32, 4, 5) vorgesehen;
gekennzeichnet durch die folgenden Merkmale:
e) an die die Durchgangsöffnung begrenzende Dichtfläche (52) schließen in Richtung der Längsachse des Gehäuses (1, 12) verlaufende rippenartige Stützelemente (3, 34, 50) an;
f) die dem Ventilschließglied (4, 5) zugewandten Stirnflächen der Stützelemente (3, 34, 50) gehen stufenlos oder annähernd stufenlos in die Dichtfläche (52) über.

2. Ventileinrichtung nach Anspruch 1, dadurch gekennzeichnet, daß die rippenartigen Stützelemente (3, 34, 50) sich quer zur Längsachse des Gehäuses (1, 12) in Richtung auf das Ventilschließglied (4, 5) zu erstrecken, wobei sie in Richtung quer zur Längsachse des Gehäuses (1, 12) so bemessen sind, daß ihre dem Ventilschließglied (4, 5) zugewandten Stirnflächen stufenlos oder annähernd stufenlos in die Dichtfläche (52) übergehen.

3. Ventileinrichtung nach Anspruch 1, dadurch gekennzeichnet, daß die die Durchgangsöffnung begrenzende Dichtfläche (52) an einem ringförmigen Körper (32) angeordnet ist, der an der Wand des Gehäuses (1, 12) angeordnet ist und sich radial in Richtung auf das Ventilschließglied (4, 5) zu erstreckt.

4. Ventileinrichtung nach Anspruch 3, dadurch gekennzeichnet, daß der ringförmige Körper von einem umlaufenden Vorsprung des Gehäuses (1, 12) gebildet wird.

5. Ventileinrichtung nach wenigstens einem der vorhergehenden Ansprüche, dadurch gekennzeichnet, daß die rippenartigen Stützelemente (3, 34, 50) mit dem ringförmigen Körper (32) als eine einstückige Baueinheit ausgebildet sind, die in das Gehäuse (1, 12) eingesetzt ist.

6. Ventileinrichtung nach wenigstens einem der vorhergehenden Ansprüche, dadurch gekennzeichnet, daß der ringförmige Körper (32) und die rippenartigen Stützelemente (3, 34, 50) als ein Gehäuseeinsatz ausgebildet sind, welcher auf einer Stufe (6) der Wand des Gehäuses (1, 12) aufsitzt.

7. Ventileinrichtung nach wenigstens einem der vorhergehenden Ansprüche, dadurch gekennzeichnet, daß die rippenartigen Stützelemente (3, 34, 50) an die Wand des Gehäuses (1, 12) angeformt sind.

8. Ventileinrichtung nach Anspruch 1, dadurch gekennzeichnet, daß die rippenartigen Stützelemente von Teilen der Wand des Gehäuses (1, 12) gebildet werden, welche in Richtung der Längsachse des Gehäuses verlaufende, in der Wand des Gehäuses (1, 12) angeordnete Vertiefungen begrenzen, wobei die Vertiefungen und die Stützelemente an die Dichtfläche anschließen, die von einem Teilbereich der Gehäuseinnenwand gebildet wird.

9. Ventileinrichtung nach wenigstens einem der vorhergehenden Ansprüche, dadurch gekennzeichnet, daß das Gehäuse 3-teilig ausgebildet ist, wobei die Dichtfläche des Ventils und die rippenartigen Stützelemente im mittleren Gehäuseteil angeordnet sind.

10. Ventileinrichtung nach Anspruch 1, dadurch gekennzeichnet, daß die Betätigungseinrichtung für das Ventil (32, 52, 4, 5) von einem Kolben (8, 4) gebildet wird, der im Gehäuse (1, 12) in Richtung der Längsachse des Gehäuses (1, 12) bewegbar angeordnet und von einem Steuerdruck in Öffnungsrichtung des Ventils (32, 4, 5) beaufschlagbar ist.

11. Ventileinrichtung nach wenigstens einem der vorhergehenden Ansprüche, dadurch gekennzeichnet, daß das Ventilschließglied (4, 5) als Ventilkolben (4) ausgebildet ist, der mit dem als Betätigungseinrichtung dienenden Kolben (8, 4) verbunden ist.

12. Ventileinrichtung nach wenigstens einem der vorhergehenden Ansprüche, dadurch gekennzeichnet, daß der als Betätigungseinrichtung dienende Kolben (8) mit dem Ventilkolben (4) als eine einstückige Baueinheit ausgebildet ist.

13. Ventileinrichtung nach wenigstens einem der vorhergehenden Ansprüche, dadurch gekennzeichnet, daß der die Betätigungseinrichtung und den Ventilkolben (4) bildende Kolben (8, 4) als Stufenkolben ausgebildet ist.

14. Ventileinrichtung nach wenigstens einem der vorhergehenden Ansprüche, dadurch gekennzeichnet, daß im Übergangsbereich von der Dichtfläche (52) zum Boden der von den rippenartigen Stützelementen (3, 34, 50) begrenzten Kanäle (49, 51) zum Boden der Kanäle (49, 51) hin abfallende Schrägen (53, 54) vorgesehen sind.
